# EUROPÄISCHE PATENTSCHRIFT

(11) **EP 2 207 020 B1**
(45) Veröffentlichungstag und Bekanntmachung des Hinweises auf die Patenterteilung: **28.02.2018**
(21) Anmeldenummer: 09177688.0
(22) Anmeldetag: 02.12.2009
(51) Int. Cl.: G01L 13/02, G01L 9/00

(54) **Kapazitiver Drucksensor**
Capacitative pressure sensor
Capteur de pression capacitif

(30) Priorität: 08.01.2009 DE 102009000071
(43) Veröffentlichungstag der Anmeldung: 14.07.2010
(73) Patentinhaber: Robert Bosch GmbH, 70442 Stuttgart (DE)
(72) Erfinder: Wolff, Janpeter, 70839, Gerlingen (DE); Niekrawietz, Remigius, 70499, Stuttgart (DE)

(56) Entgegenhaltungen:
- WO-A1-85/02677
- DE-C1- 4 132 391
- US-A- 5 483 834
- US-A1- 2001 032 515

## Beschreibung

### Stand der Technik

Die Erfindung betrifft einen kapazitiven Drucksensor sowie ein Verfahren zu dessen Herstellung.

Bei einem kapazitiven Drucksensor werden in einem Halbleitersubstrat üblicherweise mittels eines mikromechanischen Herstellungsverfahren Elektroden zur Bildung eines Kondensators erzeugt. Dabei wird eine der Elektroden derart erzeugt, dass sie gegenüber der anderen Elektrode beweglich ausgestaltet ist. Typischerweise wird hierzu die Elektrode in eine Membran integriert. Wird nun die Membran durch eine Druckbeaufschlagung durchgebogen, verändert sich der Abstand der Kondensatorplatten und somit die Kapazität des Kondensators. Diese Veränderung kann im Rahmen eines Verstärkerbetriebs, bei dem der Verstärkungsfaktor von der Kapazität des Kondensators abhängt, ausgenutzt werden, um die Auslenkung der Membran auf einfache Weise kapazitiv zu erfassen.

Im Vergleich zu Drucksensoren, die auf der Bildung eines Drucksignals durch Piezowiderstände basieren, ist bei gängigen kapazitiven Drucksensoren das Ausgangssignal in der Regel nicht linear. Dies liegt u. a. daran, dass die Membran flexibel durchbogen wird und somit eine auf die gesamte Kondensatorfläche bezogene nichtlineare Abstandsänderung vorliegt. Eine mögliche Abhilfe zur Ausschaltung der nichtlinearen Effekte stellt beispielsweise die Verwendung von starren Elektroden dar.

Ein kapazitiver Drucksensor mit einer starren Elektrode ist beispielsweise aus der DE 10 2005 004 878 A1 bekannt, bei dem die obere Elektrode in Form eines Stempels und die Gegenelektrode im Substrat ausgebildet ist. Der so gebildete Kondensator weist ein streng druckproportionales Verhalten der reziproken Kapazität auf, ohne dass Nichtlinearitäten vorhanden wären. Es ist somit mit diesem kapazitiven Sensor eine Druckerfassung ohne die sonst erforderliche Korrektur der Nichtlinearitäten möglich.
Aus der nicht vorveröffentlichten Schrift DE 10 2007 029414 A1 ist eine weitere Möglichkeit bekannt, die Nichtlinearität bei gängigen kapazitiven Absolutdrucksensoren zu beheben. Sie besteht darin, die Elektroden seitlich aneinander vorbei zu führen, um dadurch ebenfalls die effektive Kapazität zu verändern. Andere kapazitive Drucksensoren sind aus den Schriften WO 85/02677, DE 41 32 391, US 5 483 834 und US 2001/032515 bekannt. Darüber hinaus besteht auch der Wunsch, mit Hilfe mikromechanischer Drucksensoren Differenzdrücke zu erfassen. Zwar können Differenzdrücke unter Verwendung von Absolutdrucksensoren erfasst werden, indem die gewonnen Messwerte voneinander subtrahiert werden, jedoch liefern derartige Systeme gerade bei hohen Drücken und geringen Differenzdrücken aufgrund der geringen Auflösung in diesen Druckbereichen nur ungenügende Messgenauigkeiten.

### Vorteile der Erfindung

Mit der vorliegenden Erfindung wird ein mikromechanisch hergestellter kapazitiver Drucksensor beschrieben, der eine erste Elektrode in einer ersten beweglichen Membran und eine zweite Elektrode in einem Aufbau auf einer zweiten beweglichen Membran aufweist. Diese erste bzw. zweite Membran lässt sich durch die Druckbeaufschlagung mittels eines Mediums derart auslenken, dass die beiden Elektroden relativ zueinander verschoben werden. In Abhängigkeit von dieser Verschiebung wird mittels eines geeigneten Erfassungsmittels eine Messgröße erfasst, die ein Maß für diese Druckbeaufschlagung repräsentiert.

Der Vorteil der vorliegenden Erfindung besteht darin, dass ein kapazitiver Differenzdrucksensor beschrieben wird, bei dem eine hohe Messgenauigkeit im Bereich geringer Druckdifferenzen auch bei hohen Druckverhältnissen realisiert werden kann. Darüber hinaus weist der vorliegende kapazitive Drucksensor einen Hohlraum zwischen den Elektroden auf, der hermetisch geschlossen werden kann. Somit ist der Bereich zwischen den Elektroden vor dem Eindringen von Partikeln und Schmutz geschützt, die den Kapazitätswert verfälschen könnten. Weiterhin ermöglicht dieser Aufbau auch den Schutz der relevanten Erfassungselemente d.h. der Elektroden gegen aggressive Medien.

In einer Weiterbildung der Erfindung ist vorgesehen, an die beiden Membranen mit dem gleichen Medium oder verschiedenen Medien unterschiedliche Drücke anzulegen. Durch ein derartiges Vorgehen kann die Messgröße, die sich aus der Kapazitätsveränderung ergibt vorteilhafterweise als Druckdifferenz zwischen den beiden angelegten Drücken interpretiert werden.
Darüber hinaus ist vorgesehen, dass die beiden Elektroden einen Abstand voneinander aufweisen, der durch die Druckbeaufschlagung auf eine Membran vergrößert oder verringert wird. Dabei ist besonders vorteilhaft, dass der Abstand der Elektroden bei der Verschiebung im Wesentlichen immer einheitlich über die gesamte Elektrodenfläche bleibt. Dies wird dadurch erreicht, dass die Elektroden als plane elektrisch leitfähige Bereiche in der ersten Membran bzw. im Aufbau vorgesehen sind. Um eine Berührung der Elektroden und somit einen Kurzschluss bei einem zu großen an der ersten Membran anliegenden Druck zu verhindern, kann vorgesehen sein, dass wenigstens eine der Elektroden eine nichtleitende Schicht aufweist.
In einem bevorzugten Aufbau des Drucksensors bewirkt die Druckbeaufschlagung auf die erste Membran eine Verringerung des Abstandes der Elektroden während eine Druckbeaufschlagung auf die zweite Membran eine Vergrößerung des Abstandes der Elektroden bewirkt. Durch die dabei erzeugte Kapazitätsänderung kann somit auf das Maß der Differenzdruckgröße geschlossen werden.

In einer zweiten Ausgestaltung der Erfindung ist vorgesehen, die Elektroden in Form einer Vielzahl von Fingern auszubilden. Im Ausgangszustand, d.h. ohne Druckbeaufschlagung auf eine der Membranen, sind dabei die Finger der ersten und der zweiten Elektrode teilweise ineinander geschoben, so dass sowohl ein Auseinanderfahren als auch ein Ineinanderfahren durch die sich ergebende Kapazitätsänderung registriert werden kann. Diese Kapazitätsänderung wird durch die seitliche Bewegung der fingerartigen Elektroden aneinander vorbei erzeugt, so dass ein größerer oder kleinerer Teil der Elektroden zur gemessenen Kapazität beiträgt.

Die Zuleitung der Medien an die Membranen ist vorteilhafterweise getrennt vorgesehen. Hierzu sind Zuführungen vorgesehen, die an geeigneten Vorrichtungen an dem Drucksensorelement durch gängige Befestigungsmethoden wie beispielsweise einem Verschweißen befestigt werden können. Besonders vorteilhaft kann dabei sein, dass die Medien von einer Seite an den Drucksensor bzw. das Drucksensorelement herangeführt werden können. Dies ermöglicht einen einfacheren Einbau des Drucksensorelements in ein Gehäuse, da die Druckzuführung nur noch einseitig vorgenommen werden muss.

Besonders vorteilhaft ist die Ausbildung der Membranen indem die erste Membran kreisförmig ausgestaltet ist und die zweite Membran um diese kreisförmige Membran herum angeordnet wird. Bevorzugt ist dabei vorgesehen, dass sich die beiden Membranen in einer Ebene befinden, wobei auch gestufte Membranen vorgesehen sein können. Der Vorteil bei einer gemeinsamen Ebene der Membranen liegt darin, dass beide Membranen in einem gemeinsamen mikromechanischen Prozess gefertigt werden können. Weiterhin ist in einer Fortbildung der Erfindung vorgesehen, dass die zweite Membran ringförmig die erste Membran komplett umschließt, wobei das nicht zwingend notwendig ist, solange die Fläche der zweiten Membran genügend Angriffsfläche für das Medium aufweist.

Um eine einheitliche Bewegung der Membran zu ermöglichen, ist vorgesehen, die erste Membran im Bereich der ersten Elektrode zu versteifen, so dass eine Boss-Membran gebildet wird. Vorzugsweise wird dabei der größte Teil der Membranfläche durch eine Verdickung versteift, auf deren oberen Ende die Elektrode erzeugt wird.

Der Aufbau, der die zweite Elektrode enthält, kann in einer Weiterbildung der Erfindung separat erzeugt, auf die zweite Membran aufgebracht und mit dieser nachträglich verbunden werden, beispielsweise durch ein Schweißverfahren. Bevorzugt wird jedoch eine Prozessierung, bei der sowohl der Aufbau als auch die beiden Membranen in einem gemeinsamen Fertigungsprozess erzeugt werden. Dabei ist insbesondere vorgesehen, dass der Aufbau und die Membran im Wesentlichen aus dem gleichen Material hergestellt wird.

Zur Erfassung bzw. zur Auswertung der Druckgröße ist eine gesonderte Auswerteschaltung vorgesehen. Diese Auswerteschaltung kann in einer besonderen Ausgestaltung der Erfindung in das Drucksensorelement integriert sein, beispielsweise auf die Oberseite des Aufbaus. Vorteilhafterweise erfolgt diese Integration über einen monolithischen Aufbau, so dass die Erzeugung der Schaltungselemente im Rahmen des Fertigungsprozesses des Aufbaus und der Membran ermöglicht wird.

Weitere Vorteile ergeben sich aus der nachfolgenden Beschreibung von Ausführungsbeispielen bzw. aus den abhängigen Patentansprüchen.

### Zeichnungen

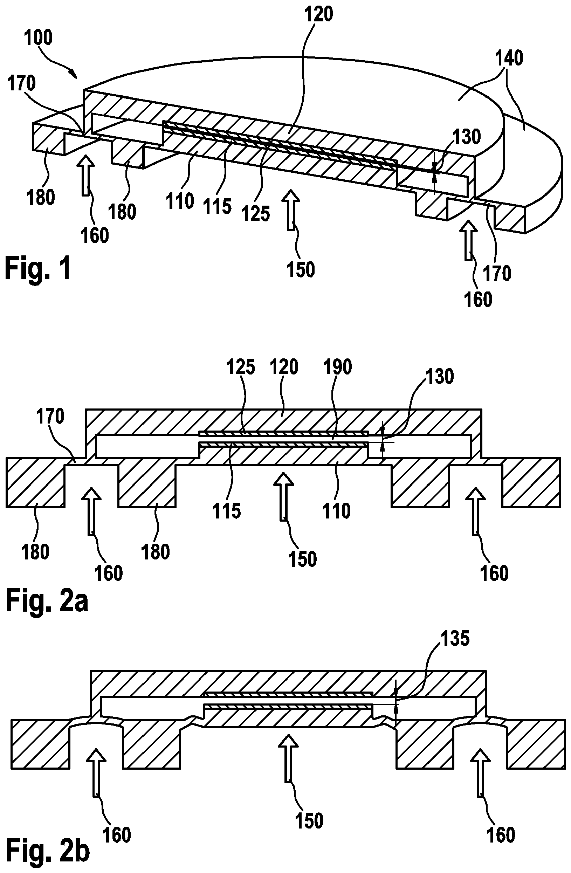

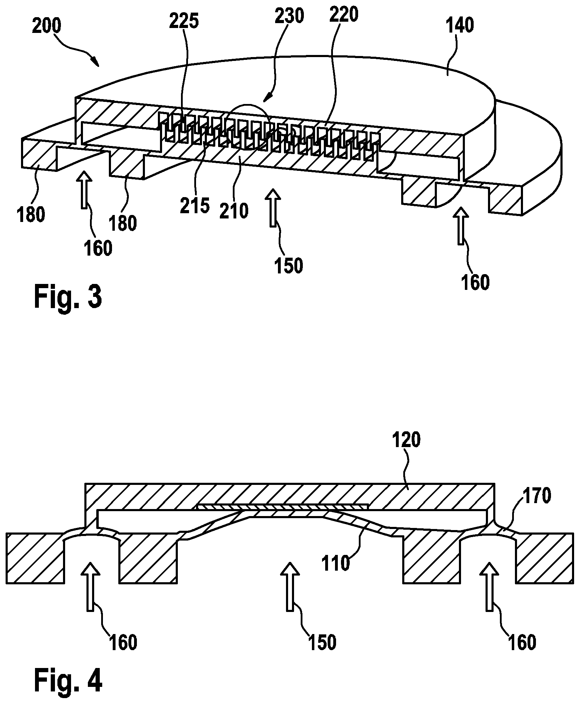

In der Figur 1 ist ein erstes Ausführungsbeispiel der vorliegenden Erfindung als 3D-Ansicht dargestellt. Figur 2a bzw. 2b zeigt die Funktion des kapazitiven Drucksensors gemäß dem ersten Ausführungsbeispiel in einer Querschnittsansicht. Ein weiteres Ausführungsbeispiel ebenfalls als 3D-Ansicht ist in Figur 3 dargestellt. Das Ausführungsbeispiel in der Figur 4 basiert auf dem ersten Ausführungsbeispiel, wobei die erste Membran hierbei vorgespannt ist.

### Ausführungsbeispiel

Im ersten Ausführungsbeispiel gemäß der Figur 1 ist ein erfindungsgemäßes Drucksensorelement 100 dargestellt, welches eine erste Membran 110 und eine zweite Membran 170 aufweist, die nebeneinander angeordnet sind. Die Anordnung ist dabei so gewählt, dass die erste Membran 110 zentral als kreisförmige Membran ausgebildet ist. Die zweite Membran 170 ist durch ein Trennungselement auf der Unterseite, welches gleichzeitig als Befestigungsflansch 180 verwendet werden kann, von der ersten Membran 110 getrennt und verläuft ringförmig um die erste Membran 110 herum. Als Begrenzung der zweiten Membran 170 kann ebenfalls ein weiteres Trennungselement auf der Unterseite vorgesehen sein, z.B. ein weiterer Befestigungsflansch 180.
Bei dem Drucksensorelement 100 nach Figur 1 sind die beiden Membranen in einer Ebene nebeneinander angeordnet. Der Vorteil bei der ebenen Realisierung der Membranen liegt darin, dass eine einfachere einheitliche Prozessierung im Rahmen gängiger mikromechanischer Verfahren vorgenommen werden kann.
Jedem der beiden Membranen kann unabhängig voneinander ein Medium zugeführt werden, wobei es sich jeweils um flüssige oder gasförmige Medien handeln kann. Die hierzu nötigen Zuleitungen können durch übliche Befestigungsverfahren (z.B. Bonden, Kleben, Verschweißen, etc) mittels entsprechender Flanschanschlüsse 180 an das Drucksensorelement 100 angebracht werden. So kann beispielsweise ein Glassockel mit integrierten Zuleitungen an das Drucksensorelement 100 mittels eines anodischen Bondverfahrens angebracht werden.
Die Ausgestaltung des kapazitiven Messelements ist mittels zweier sich gegenüberliegenden flächig ausbreitender Elektroden 115 und 125 vorgesehen, wobei die beiden Elektroden sich im Ausgangszustand d.h. im drucklosen Zustand in einem Abstand 130 voneinander befinden. Wie in der Figur 1 zu erkennen ist, ist die erste Elektrode 115 in die erste Membran 110 integriert. Die zweite Elektrode 125 ist in einen Aufbau 120 integriert, der oberhalb der ersten Elektrode 115 und somit oberhalb der ersten Membran 110 angeordnet ist und mit der zweiten Membran 170 auf der Oberseite zumindest in Wirkverbindung steht. Der Aufbau 120 dient zusätzlich dazu, einen Hohlraum 190 zu erzeugen, in dem sich die beiden Elektroden bewegen können, ohne dass die Gefahr besteht, dass Partikel von außerhalb die Kapazitätsmessung beeinflussen.

Die Herstellung der beiden Elektroden 115 und 125 erfolgt mittels üblicher mikromechanischer Verfahren. So ist beispielsweise möglich, die beiden Elektroden 115 und 125 mittels einer Dotierung des Halbleitermaterials zu erzeugen, aus dem die erste Membran 110 bzw. der Aufbau 120 besteht. Darüber hinaus ist jedoch auch eine epitaktische Erzeugung der Membranen, der Elektroden und des Aufbaus unter Verwendung von Opferschichten und/oder porösen Silizium möglich. Ein typisches Verfahren hierzu ist u. a. in der DE 100 32 579 A1 beschrieben.

Alternativ kann jedoch auch vorgesehen sein, dass der Körper bestehend aus erster und zweiter Membran sowie der Flanschanschlüsse aus einem ersten Wafer und der Aufbau aus einem zweiten Wafer erzeugt wird. In diesem Fall wird der Aufbau erst nachträglich auf die zweite Membran 170 aufgebracht und mit dieser fest verbunden, beispielsweise durch ein Bond- oder ein Klebeverfahren.

Zur Ansteuerung der Elektroden bzw. zur Auswertung der Kapazitätsänderung bei einer Durchbiegung der Membranen ist eine entsprechende Schaltung 140 vorgesehen. Diese Schaltung kann separat in einem anderen Teil des Gehäuses vorgesehen sein, in das das Drucksensorelement 100 untergebracht ist. Bevorzugt wird jedoch diese Schaltung 140 oder zumindest Teile der Schaltung direkt in das Drucksensorelement 100 integriert. So kann beispielsweise der obere Teil des Aufbaus 120 dafür verwendet werden, Schaltungselemente zur Ansteuerung, Erfassung und/oder Auswertung der Kapazitätsänderung aufzunehmen. Eine solche Integration kann ebenfalls mittels gängiger mikromechanischer Verfahren durchgeführt werden. Alternativ kann auch der obere Teil der zweiten Membran 170 oder der äußere Rand oberhalb eines der Flanschanschlüsse 180 für eine derartige Integration verwendet werden.

In den Figuren 2a und 2b ist die Wirkungsweise des erfindungsgemäßen Drucksensorelements dargestellt. Dabei zeigt Figur 2a die Ausgangssituation, bei dem an den Drucksensor noch kein Druck angelegt ist (p₁ (150) = p₂ (160) = 0). In dieser Situation befinden sich die beiden Elektroden 115 und 125 in der Ausgangslage und weisen einen Abstand 130 voneinander auf. Als Kapazität dieser Elektrodenanordnung kann hierbei eine Ausgangskapazität C₀ bestimmt werden. Weißt nun eines der beiden Medien einen Druck auf, wird die entsprechende Membran durchgebogen. Als Reaktion wird entweder die erste oder zweite Elektrode verschoben, so dass sich der Abstand 130 und somit auch die Kapazität verändert.

Im einfachsten Fall wird lediglich eine der beiden Membranen durch einen Druck p₁ (150) bzw. p₂ (160) verbogen. So wird bei einem Druck p₁ auf die Membran 110 die erste Elektrode 110 auf die zweite Elektrode 125 zu bewegt, so dass sich ein geringerer Abstand 135 einstellt. In diesem Fall erhöht sich die Kapazität des Gesamtsystems in Abhängigkeit von der Verbiegung der ersten Membran 150. Um nichtlineare Effekte bei der Kapazitätsänderung in Folge der Verbiegung der Membran zu vermeiden, beispielsweise aufgrund der Verbiegung in deren Randbereich, ist eine Verdickung der ersten Membran 110 vorgesehen (Bildung einer Boss-Membran), so dass die erste Elektrode 115 nahezu parallel verschoben wird.

Wird jedoch der zweiten Membran 170 ein unter dem Druck p2 (160) > 0 stehendes Medien zugeführt, verbiegt sich diese Membran ebenfalls, wobei sich der mit der zweiten Membran 170 in Wirkverbindung stehende Aufbau 120 nach oben bewegt. In Folge dieser Bewegung wird die zweite Elektrode 125 von der ersten Elektrode 115 weg bewegt, so dass sich die Kapazität dieser Messanordnung verringert. Aus der Verringerung der Kapazität kann dabei ebenso wie aus der Erhöhung direkt ein Maß für den angelegten Druck an die zweite Membran 170 abgeleitet werden.

Die Figur 2b zeigt einen Fall, bei dem sowohl der ersten als auch der zweiten Membran ein unter Druck stehendes Medium zugeführt wird. In diesem Fall sind die beiden zuvor genannten Verschiebungen der beiden Elektroden gleichzeitig zu beobachten. Je nach Differenz der Drücke Δp=p₁-p₂ wird somit eine effektive Erhöhung des Abstands oder eine effektive Verringerung des Abstands beider Elektroden zu beobachten sein. Die in diesem Zustand vorliegende Kapazitätsänderung ist somit ein Maß für die Druckdifferenz zwischen den beiden anliegenden Drücken p1 und p2.

Eine weitere Ausführungsform der Erfindung wird in der Figur 3 gezeigt. Im Gegensatz zu den flächigen Elektroden des vorherigen Ausführungsbeispiels werden bei diesem Drucksensorelement 200 die in der ersten Membran 210 und dem Aufbau 220 integrierten Elektroden als fingerartige Elemente 215 und 225 ausgebildet, die im drucklosen Zustand wenigstens teilweise ineinander greifen (siehe Bereich 230). Bei dieser Ausführungsform werden die Elektroden bei einer Durchbiegung der Membranen seitlich aneinander vorbei geführt. Der Vorteil bei dieser Ausführung besteht in der Erhöhung der effektiven Kapazitätsfläche, so dass schon geringere Auslenkungen erfasst werden können.

Die Elektroden 215 und 225 können in einer weiteren Ausgestaltung sowohl ringförmig als auch in paralleler von einer Seite zur anderen reichenden Stegform in der ersten Membran 210 bzw. in dem Aufbau 220 ausgebildet sein.

Mit einer entsprechenden Gestaltung der Membranen kann das Drucksensorelement auch für unterschiedliche Druckbereiche vorgesehen sein. So können die Membranen einzeln oder gemeinsam dicker oder dünner ausgelegt werden, um einen höheren oder einen niedrigeren Druckbereich abzudecken.

Weiterhin ist möglich, wenigstens eine der Elektroden mit einer Isolationsschicht zu versehen, um eine Kurzschluss infolge einer Berührung bei einem zu großen anliegenden Druck p1 zu vermeiden. Alternativ können hierzu auch Abstützelemente abseits der Elektroden im Hohlraum 190 verwendet werden (nicht gezeigt).

Optional kann auch vorgesehen sein, einen der beiden Zugänge zu den Membranen zu verschließen, um einen Absolutdrucksensor zu erzeugen.

Ausgehend vom ersten Ausführungsbeispiel kann auch vorgesehen sein, die erste Membran 110 vorzuspannen. In diesem Fall, der in Figur 4 dargestellt ist, weist die erste Membran 110 bereits ohne das Anliegen eines Drucks p1 (150) bereits eine Verbiegung auf. Diese Verbiegung ist dabei so groß, dass die erste Membran 110 bereits den oberen Aufbau 120 berührt. Zur Vereinfachung ist in der Figur 4 die erste Elektrode 115 nicht eingezeichnet, jedoch ist bei dieser Ausführung zwingend notwendig, dass die erste und/oder die zweite Elektrode eine Schutzschicht aufweist, so dass bei der Berührung kein elektrischer Kontakt zwischen den beiden Elektroden erzeugt wird.

Bei dieser Ausführung der vorliegenden Erfindung, dem sogenannten touch mode, ändert sich bei einer weiteren Durchbiegung der ersten Membran 110 aufgrund eines anliegenden ersten Drucks p1 (150) > 0 die Berührungsfläche mit dem oberen Aufbau 120. Die dabei erzeugte Kapazitätsänderung weist ebenfalls ein lineares Verhalten auf. Das gleiche Verhalten wird ebenfalls bei einem Anlegen eines Drucks p2 (160) an die zweite Membran 170 beobachtet, wobei sich in diesem Fall die Berührungsfläche vermindert. Es ist daher bei der Auslegung der Vorspannung und damit der Berührungsfläche zu beachten, dass im vorgesehenen Druckbereich des Drucksensors sich beide Druckerhöhungen in einer entsprechenden Änderung der Berührungsfläche widerspiegeln. Ist demgegenüber eine Druckzuführung nur über den Druckzugang 150 vorgesehen, kann eine geringere Berührungsfläche vorgesehen sein.

Allgemein kann eine Verbiegung der Membran im drucklosen Zustand über eine geeignete Herstellung erreicht werden. Dabei werden in den Schichtaufbau der ersten Membran unterschiedliche Schichten mit entsprechenden Spannungen erzeugt. Vorteilhafterweise werden dabei mehrere Schichten verwendet, die in der Summe eine Druckspannung aufweisen.

## Patentansprüche

1. Mikromechanischer kapazitiver Differenzdrucksensor, bei dem
- eine erste Elektrode (115, 215) in einer ersten beweglichen Membran (110, 210) und
- eine zweite Elektrode (125, 225) in einem Aufbau (120, 220) auf einer zweiten beweglichen Membran (170) integriert ist, wobei
• eine Druckbeaufschlagung mittels eines Mediums auf eine der beiden Membranen die beiden Elektroden relativ zueinander verschiebt,
• ein Mittel vorgesehen ist, welches eine Messgröße erfasst, die in Abhängigkeit von der Verschiebung ein Maß für die Druckbeaufschlagung repräsentiert, in einer Ebene
wobei die erste und die zweite Membran in einer Ebene nebeneinander angeordnet sind, die beiden Elektroden einen Abstand (130) voneinander aufweisen, **dadurch gekennzeichnet, dass** der Aufbau (120, 220) oberhalb der ersten Elektrode (115, 215) und oberhalb der ersten Membran (110, 210) angeordnet ist, so dass der Abstand (130) durch die Druckbeaufschlagung vergrößert oder verringert wird.

2. Mikromechanischer kapazitiver Drucksensor nach Anspruch 1, **dadurch gekennzeichnet, dass** die beiden Membranen mit unterschiedlichen Drücken (150, 160) beaufschlagbar sind, wobei die Messgröße eine Druckdifferenz zwischen den beiden Drücken darstellt.

3. Mikromechanischer kapazitiver Drucksensor nach Anspruch 2, **dadurch gekennzeichnet, dass** die Druckbeaufschlagung auf die erste Membran eine Verringerung und die Druckbeaufschlagung auf die zweite Membran eine Vergrößerung des Abstands der Elektroden erzeugt.

4. Mikromechanischer kapazitiver Drucksensor nach einem der Ansprüche 1 oder 2, **dadurch gekennzeichnet, dass** die erste und zweite Elektrode als fingerartige ineinandergreifende Elektroden (215, 225) ausgebildet sind.

5. Mikromechanischer kapazitiver Drucksensor nach Anspruch 4, **dadurch gekennzeichnet, dass** bei einer Druckbeaufschlagung einer der beiden Membranen die beiden Elektroden seitlich aneinander vorbei bewegt werden, die erste Elektrode bei einer Druckbeaufschlagung seitlich an der zweiten Elektrode vorbei bewegt wird.

6. Mikromechanischer kapazitiver Drucksensor nach einem der vorhergehenden Ansprüche, **dadurch gekennzeichnet, dass** für jede Membran eine gesonderte Zuführung des Mediums vorgesehen ist, wobei die beiden Zuführungen von einer Seite des Drucksensorelements (100) erfolgt.

7. Mikromechanischer kapazitiver Drucksensor nach einem der vorhergehenden Ansprüche, **dadurch gekennzeichnet, dass** die erste Membran (110) zentral angeordnet ist und die zweite Membran (170) abseits der ersten Membran angeordnet ist.

8. Mikromechanischer kapazitiver Drucksensor nach einem der vorhergehenden Ansprüche, **dadurch gekennzeichnet, dass** die erste Membran im Bereich der ersten Elektrode eine Versteifung aufweist.

9. Mikromechanischer kapazitiver Drucksensor nach einem der vorhergehenden Ansprüche, **dadurch gekennzeichnet, dass** der Aufbau im Wesentlichen ringförmig auf die zweite Membran aufgesetzt ist, wobei die Membran und der Aufbau aus dem gleichen Material bestehen.

10. Mikromechanischer kapazitiver Drucksensor nach einem der vorhergehenden Ansprüche, **dadurch gekennzeichnet, dass** eine Auswerteschaltung zur Erfassung und/oder Verarbeitung der Messgröße auf der Oberseite (140) des Drucksensorelements (100) vorgesehen ist, wobei die Auswerteschaltung in den Aufbau (120) integriert ist.

## Claims

1. Micromechanical capacitive differential pressure sensor, in which
- a first electrode (115, 215) is integrated in a first movable membrane (110, 210) and
- a second electrode (125, 225) is integrated in a structure (120, 220) on a second movable membrane (170),
• an application of pressure to one of the two membranes by means of a medium displacing the two electrodes in relation to one another,
• a means which senses a measured variable that represents a measure of the application of pressure in dependence on the displacement being provided,
the first and second membranes being arranged next to one another in one plane,
the two electrodes being at a distance (130) from one another,
**characterized in that**
the structure (120, 220) is arranged above the first electrode (115, 215) and above the first membrane (110, 210), so that the distance (130) is increased or decreased by the application of pressure.

2. Micromechanical capacitive pressure sensor according to Claim 1, **characterized in that** different pressures (150, 160) can be applied to the two membranes, the measured variable representing a pressure difference between the two pressures.

3. Micromechanical capacitive pressure sensor according to Claim 2, **characterized in that** the application of pressure to the first membrane produces a decrease in the distance between the electrodes and the application of pressure to the second membrane produces an increase in the distance between the electrodes.

4. Micromechanical capacitive pressure sensor according to either of Claims 1 and 2, **characterized in that** the first electrode and the second electrode are formed as finger-like inter-engaging electrodes (215, 225).

5. Micromechanical capacitive pressure sensor according to Claim 4, **characterized in that**, when pressure is applied to one of the two membranes, the two electrodes are moved laterally past one another, the first electrode is moved laterally past the second electrode when pressure is applied.

6. Micromechanical capacitive pressure sensor according to one of the preceding claims, **characterized in that** a separate supply of the medium is provided for each membrane, the two supplies taking place from one side of the pressure sensor element (100).

7. Micromechanical capacitive pressure sensor according to one of the preceding claims, **characterized in that** the first membrane (110) is arranged centrally and the second membrane (170) is arranged away from the first membrane.

8. Micromechanical capacitive pressure sensor according to one of the preceding claims, **characterized in that** the first membrane has a stiffening in the region of the first electrode.

9. Micromechanical capacitive pressure sensor according to one of the preceding claims, **characterized in that** the structure is placed on the second membrane in a substantially annular manner, the membrane and the structure consisting of the same material.

10. Micromechanical capacitive pressure sensor according to one of the preceding claims, **characterized in that** an evaluation circuit for sensing and/or processing the measured variable is provided on the upper side (140) of the pressure sensor element (100), the evaluation circuit being integrated in the structure (120).

## Revendications

1. Capteur de pression différentielle capacitif micromécanique, avec lequel
- une première électrode (115, 215) est intégrée dans une première membrane (110, 210) mobile et
- une deuxième électrode (125, 225) dans une structure (120, 220) sur une deuxième membrane (170) mobile,
* une sollicitation par la pression au moyen d'un fluide sur l'une des deux membranes décalant les deux électrodes l'une par rapport à l'autre,
* un moyen étant présent, lequel acquiert une grandeur de mesure qui représente une mesure de la sollicitation par la pression en fonction du décalage, la première et la deuxième membrane étant disposées l'une à côté de l'autre dans un plan,
les deux électrodes présentant un écart (130) l'une de l'autre,
**caractérisé en ce que** la structure (120, 220) est disposée au-dessus de la première électrode (115, 215) et au-dessus de la première membrane (110, 210), de sorte que l'écart (130) puisse être agrandi ou diminué par la sollicitation par la pression.

2. Capteur de pression capacitif micromécanique selon la revendication 1, **caractérisé en ce que** les deux membranes peuvent être sollicitées par des pressions (150, 160) différentes, la grandeur de mesure représentant une différence de pression entre les deux pressions.

3. Capteur de pression capacitif micromécanique selon la revendication 2, **caractérisé en ce que** la sollicitation par la pression de la première membrane produit une diminution et la sollicitation par la pression de la deuxième membrane un agrandissement de l'écart entre les électrodes.

4. Capteur de pression capacitif micromécanique selon l'une des revendications 1 ou 2, **caractérisé en ce que** la première et la deuxième électrode sont réalisées sous la forme d'électrodes (215, 225) qui s'engrènent l'une dans l'autre à la manière de doigts.

5. Capteur de pression capacitif micromécanique selon la revendication 4, **caractérisé en ce que** lors d'une sollicitation par la pression de l'une des deux membranes, les deux électrodes passent latéralement l'une à côté de l'autre, la première électrode passant latéralement à côté de la deuxième électrode dans le cas d'une sollicitation par la pression.

6. Capteur de pression capacitif micromécanique selon l'une des revendications précédentes, **caractérisé en ce qu'**il existe un acheminement distinct du fluide pour chaque membrane, les deux acheminements étant effectués depuis un côté de l'élément capteur de pression (100).

7. Capteur de pression capacitif micromécanique selon l'une des revendications précédentes, **caractérisé en ce que** la première membrane (110) est disposée de manière centrée et la deuxième membrane (170) est disposée à l'écart de la première membrane.

8. Capteur de pression capacitif micromécanique selon l'une des revendications précédentes, **caractérisé en ce que** la première membrane possède un renforcement dans la zone de la première électrode.

9. Capteur de pression capacitif micromécanique selon l'une des revendications précédentes, **caractérisé en ce que** la structure est déposée sensiblement en forme d'anneau sur la deuxième membrane, la membrane et la structure se composant du même matériau.

10. Capteur de pression capacitif micromécanique selon l'une des revendications précédentes, **caractérisé en ce qu'**un circuit d'interprétation destiné à acquérir et/ou à traiter la grandeur de mesure se trouve sur le côté supérieur (140) de l'élément capteur de pression (100), le circuit d'interprétation étant intégré dans la structure (120).
